(19) Europäisches Patentamt / European Patent Office / Office européen des brevets

(11) **EP 2 361 710 A1**

(12) **EUROPEAN PATENT APPLICATION**

(43) Date of publication:
**31.08.2011 Bulletin 2011/35**

(51) Int Cl.:
**B23D 57/00** (2006.01)     **B28D 1/08** (2006.01)

(21) Application number: **11154695.8**

(22) Date of filing: **16.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.02.2010 IT MI20100263**

(71) Applicant: **Barsanti Macchine S.p.A.**
**54100 Massa (IT)**

(72) Inventor: **Barsanti, Fosco**
**54100, Massa (IT)**

(74) Representative: **Raimondi, Margherita et al**
**Dott. Ing. Prof. Alfredo Raimondi S.r.l.,**
**Piazzale Cadorna, 15**
**20123 Milano (IT)**

(54) **Apparatus for varying the cutting thickness at 10mm intervals of wires of machines for cutting stone materials.**

(57)     Apparatus for varying the cutting thickness at 10 mm intervals of wires (1) of machines (10) for cutting stone materials (2), comprising at least two columns (11) each of which has mounted thereon a sliding member (12) displaceable in the vertical direction (Z-Z) from a top start-of-cut position to a bottom end-of-cut position and vice versa, there being respectively mounted on each sliding member (12), at least one driving roller (13) or at least one idle transmission roller (14), the cutting wires (1) being endlessly wound around said driving/idle rollers (13, 14), and at least one row (150) of pulleys (15) for activating/tensioning the cutting wire (1) in the longitudinal direction (X-X) being mounted on at least one sliding member, said pulleys having at least one groove (15a) for seating the wire (1), where the number (NGp) of grooves (15a) of each pulley (15), the pitch (PPf) of the pulleys (15) in each row (150) and the number (NFt) of the rows (150) of pulleys mounted on the machine are related by the following equation

$$NGp = PPf / NFt$$

and where the pitch (PPf) of the pulleys (15) in each row (150) is expressed in cm and the interaxial distance between the grooves (15a) of each pulley (15) is 10 mm.

Fig.1

**Description**

The present invention relates to an apparatus for the modular adjustment at 10 mm intervals of the interaxial distance between cutting wires in machines for cutting stone materials.

It is known in the technical sector of machines for processing stone materials to use so-called multiwire machine tools for cutting blocks into slabs; said machines are generally formed by a column-type support structure having, mounted thereon, sliding plates displaceable in the vertical direction, for performing the so-called downward cutting stroke and subsequent return movement.

The sliding members support several driving and/or idle rollers provided with a plurality of grooves formed on the respective annular surface, for seating the cutting tools consisting of a diamond-coated flexible wire, namely wires with a steel core on which sintered diamond beads (metal segments) are mounted, said wires being endlessly wound around said rollers.

It is also known that, when the machine is set up for the cuts required by the specific machining operation, the single wires, which must work efficiently, are arranged at a relative distance in the transverse direction equal to the thickness of the slabs which are to be obtained and then tensioned with a preset programmed force, by means of an associated auxiliary pulley joined to the sliding flange and movable with respect to the latter perpendicularly relative to the wire and parallel to the plane comprising the rotating wire. With the known machines it is however only possible to set up the machines, activating the cutting wires at the start of the cycle and, in the event of a variation in the cutting thicknesses either for slabs of a different block or for slabs of the same block, it is required to stop the machine, disassemble the wire-seating rollers, insert spacers between the said rollers in order to obtain the new interaxial distance for cutting and reassemble the machine, all these operations resulting in long machine downtimes and a consequent drop in productivity of the machine.

In addition to the above, with the known machines it is not possible to obtain in a simple and practical manner modular interaxial intervals of 10 mm, or multiples thereof, for the cutting of slabs with corresponding thicknesses of 10 mm, 20 mm, 30 mm, etc.

The technical problem which is posed, therefore, is to provide an apparatus for positioning cutting wires in machines for cutting stone materials, which apparatus is suitable for providing a modular interaxial interval of 10 mm between the wires, making it possible to perform cuts for multiples of said thickness without the need for complicated displacement of the wire-tensioning devices transversely relative to the cutting direction.

In connection with this problem it is also required that the apparatus should be easy and inexpensive to produce and assemble and be able to be installed easily also on already existing machines without the need for special adaptation and that it should allow a rapid change-over of the interaxial cutting distance without the need for long and complicated disassembly and reassembly operations, so as to reduce drastically the machine downtime necessary for changing the cutting thicknesses.

These results are achieved according to the present invention by an apparatus for positioning and activating cutting wires in machine for cutting stone materials according to the characteristic features of Claim 1.

Further details may be obtained from the following description of a non-limiting example of embodiment of the subject of the present invention provided with reference to the accompanying drawings in which:

| | |
|---|---|
| Figure 1: | shows a perspective view of a cutting machine with apparatus according to the present invention; |
| Figure 2: | shows a top plan view of the machine according to Fig. 1; |
| Figure 3: | shows a schematic front view of the apparatus according to the invention for machines with an odd number of driving/idle rollers; |
| Figure 4a,4b: | show a schematic front view of the arrangement of the pulleys according to Fig. 3 for cutting thicknesses of 20 mm and 30 mm, respectively; |
| Figure 5: | shows a schematic front view of the apparatus according to the invention for machines with an even number of driving/idle rollers; |
| Figure 6a,6b: | show a schematic front view of the symmetrical arrangement of the pulleys of the apparatus according to Fig. 5 intended to cut slabs with a thickness of 20 mm and 30 mm, respectively. |

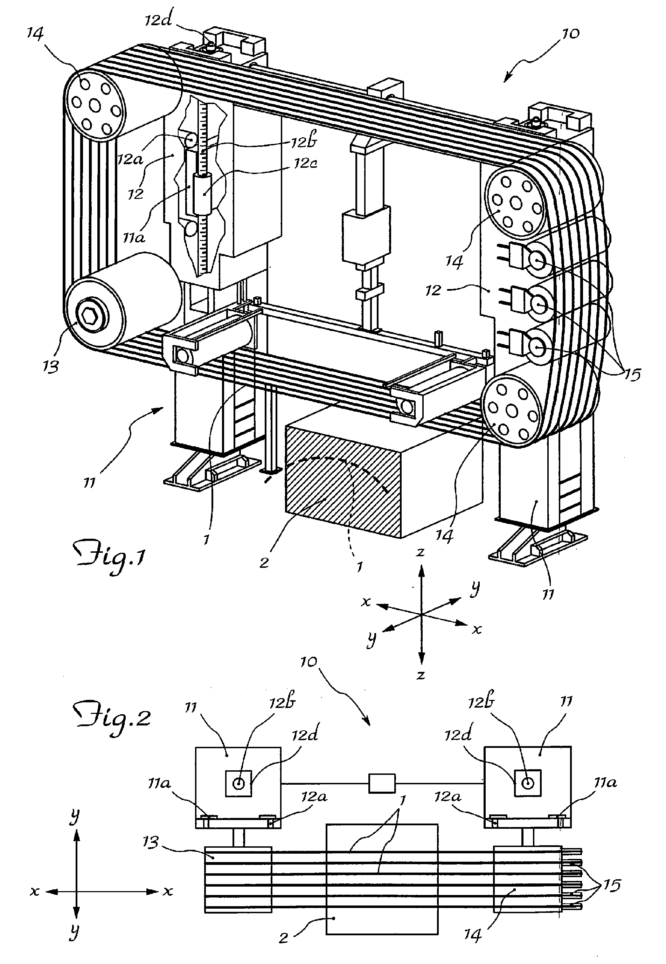

As shown in Figs. 1 and 10 and assuming solely for the sake of convenience of the description and without any limitation of meaning a set of three reference axes in a longitudinal direction X-X, transverse direction Y-Y and vertical direction Z-Z, respectively, a machine tool 10 for cutting stone materials comprises at least columns 11 having, mounted thereon, at least one sliding member 12 displaceable in the vertical direction Z-Z from a top start-of-cut position into a bottom end-of-cut position (downward stroke) and vice versa.

The sliding members 12 are guided by respective rollers 12a co-operating with slides 11a on each column 11 and moved by a conventional worm screw 12b engaged with a sleeve 12c and actuated by an actuator 12d.

The sliding members 12 also have, mounted thereon, at least one driving roller 13 or at least one idle roller 14 for transmission of the cutting wires 1, as well as the apparatus for activating, controlling and adjusting the tension of the wires 1 during cutting of the block 2 arranged between the two columns; said activation/tensioning apparatus being only schematically shown with the associated pulleys 15.

All the rollers, i.e. both the driving roller 13 and the transmission roller 14 have a plurality of grooves for seating the wires 1, arranged at an interaxial distance of 10 mm.

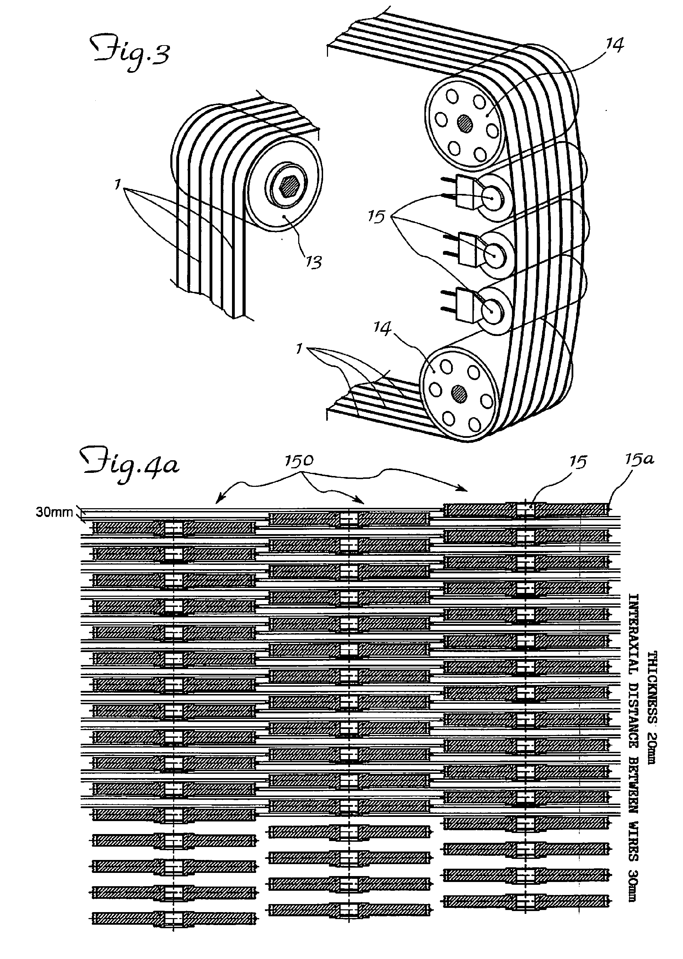

As schematically shown in Fig. 3, a first embodiment of the machine with an odd number of rollers is envisaged, said rollers comprising a drive roller 13 arranged on a column 11 and two idle transmission rollers 14 arranged on the other column 11; for this configuration it is envisaged that the pulleys 15 for activating/tensioning the wires 1 are all arranged on the same side and preferably on the side where the transmission rollers 14 are arranged, being situated between them in the vertical direction Z-Z.

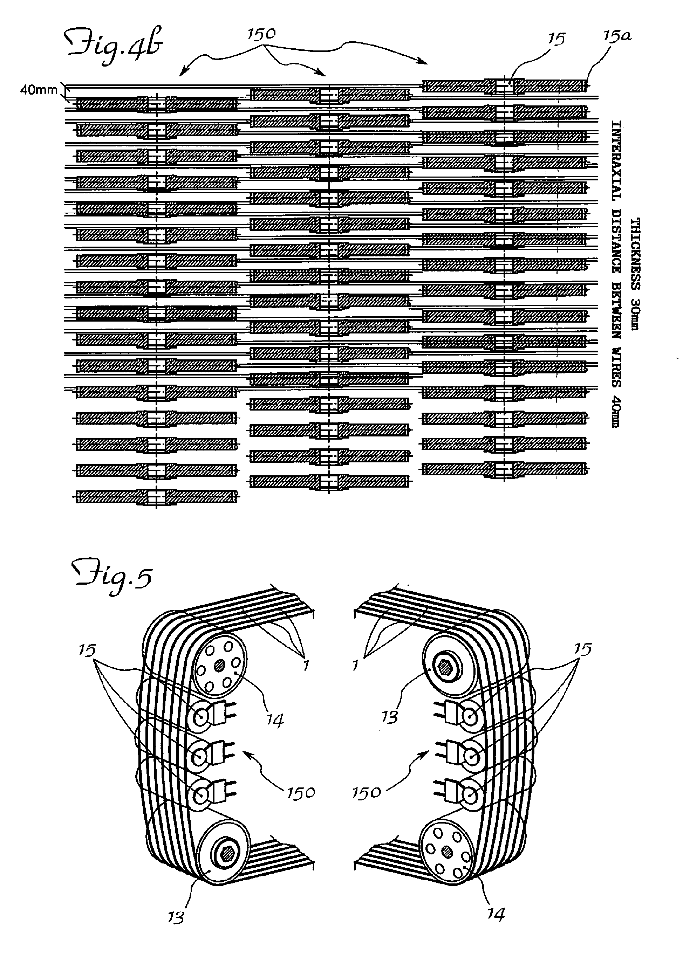

Fig. 5 shows instead a second embodiment of the machine which envisages an equal number of rollers comprising a drive roller 13 and three idle transmission rollers 14; in this configuration the activation and tensioning pulleys 15 are arranged in rows 150 preferably situated between pairs of adjacent rollers in the vertical direction Z-Z.

In both cases and taking into account the fact that a single pulley 15 must correspond to each wire 1 and vice versa, the problem consists in determining the exact number of grooves NGp for each activation/tensioning pulley 15, from which it is possible to obtain cutting intervals of 10 mm or multiples thereof.

According to the invention it is envisaged that this number of grooves NGp required to obtain the technical result is equal to the modulus of the pitch of the pulleys 15 per row PPf, expressed in cm, divided by the number of rows 150 of tensioning devices NFt mounted on the machine, namely:

$$NGp = PPf / NFt$$

where the pitch of the grooves in each pulley is always equal to 10 mm.

Examples of an arrangement of tensioning rollers with corresponding wire-seating grooves are shown in Figs. 4a and 4b for machines with an odd number of rollers; as can be seen: assuming 48 cutting wires, it is possible to obtain both a cutting thickness 20 mm and a cutting thickness 30 mm, but also greater thicknesses (60/70 mm not shown) using only three rows of pulleys each of which with three grooves 15a.

It is also envisaged that the interaxial distance between the wires is always equal to the final cutting thickness of the slab plus the diameter of the cutting wire, in order to compensate for the material lost during cutting owing to the thickness of the wire itself.

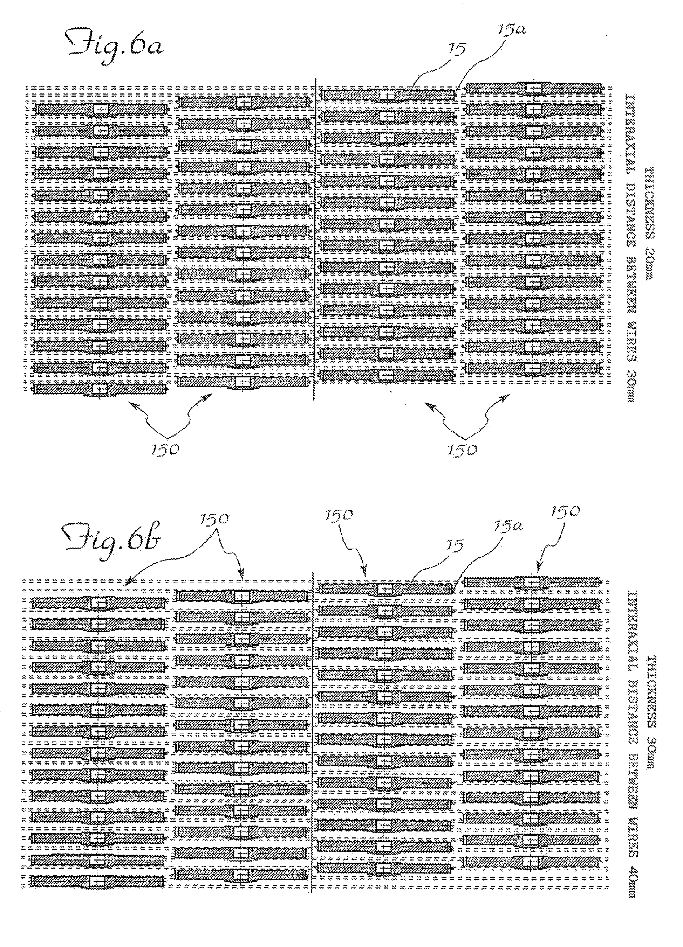

In a similar manner for machines provided with an equal number of rollers 13, 14, as shown in Fig. 5, where the rows 150 of pulleys 15 may be arranged subdivided between each column; as shown in the examples according to Figs. 6a, 6b with 56 cutting wires it also possible to obtain both a cutting thickness 20 mm and a cutting thickness 30 mm, but also greater thicknesses (60/70 mm not shown), with only three rows 150 of pulleys 15 per column, each pulley being formed with three grooves 15a in accordance with the general formula described above.

Although the machine with an even number of rollers has been shown in relation to a symmetrical arrangement of the activation/tensioning pulleys, it is envisaged that in the case of a smaller number of cutting wires the pulleys may be arranged all on the same side, while respecting the rule of minimizing the number of pulleys in relation to the number of grooves required.

In addition it is known that in the case of increased cutting thicknesses the number of excess wires will be excluded from the cutting operation and the calculations, by displacing the associated activation pulleys 15 towards the respective column 11 so that the corresponding wire is not tensioned for the cutting operation and removing the wire from the rollers.

During cutting the retracted pulleys do not create any interference for the active wires.

It is envisaged, moreover, that the general formula according to the present invention may be used in the most appropriate manner in order to determine:

- either the number (NGp) of grooves per pulley
- or the number (NFp) of rows 150 of pulleys
- or the pitch (PPf) of the pulleys per row depending on the design specifications stipulated for each machine.

It is therefore clear how with the apparatus according to the invention it is possible to achieve fast, low-cost and modular management of the variation in the cutting thicknesses, at 10 mm intervals, in machines for wire-cutting stone materials, being safe and reliable and at the same time simple and inexpensive to implement and install on the machine, even in the case of machines which are already operative.

Although described with reference to a machine with two columns having projecting pulleys 15 and rollers 13, 14, the apparatus is similarly applicable also to machines with four columns 11 having cutting-wire drive/transmission rollers supported on both the ends of the rotational shaft. Although described in connection with certain constructional forms and certain preferred examples of embodiment of the invention, it is understood that the scope of protection of the present patent is defined solely by the following claims.

**Claims**

1. Apparatus for varying the cutting thickness at 10 mm intervals of wires (1) of machines (10) for cutting stone materials (2), comprising at least two columns (11) each of which has mounted thereon a sliding member (12) displaceable in the vertical direction (Z-Z) from a top start-of-cut position to a bottom end-of-cut position and vice versa, there being respectively mounted on each sliding member (12), at least one driving roller (13) or at least one idle transmission roller (14), the cutting wires (1) being endlessly wound around said driving/idle rollers (13,14), and at least one row (150) of pulleys (15) for activating/tensioning the cutting wire (1) in the longitudinal direction (X-X) being mounted on at least one sliding member, said pulleys having at least one groove (15a) for seating the wire (1)

**characterized in that**
the number (NGp) of grooves (15a) of each pulley (15), the pitch (PPf) of the pulleys (15) in each row (150) and the number (NFt) of the rows (150) of pulleys mounted on the machine are related by the following equation

$$NGp = PPf \ / \ NFt$$

and **in that**
the pitch (PPf) of the pulleys (15) in each row (150) is expressed in cm and the interaxial distance between the grooves (15a) of each pulley (15) is 10 mm.

2. Apparatus according to Claim 1, **characterized in that** it comprises an odd number of driving rollers (13) and transmission rollers (14).

3. Apparatus according to Claim 1, **characterized in that** it comprises an even number of driving rollers (13) and transmission rollers (14).

4. Apparatus according to Claim 2 or 3, **characterized in that** the pulleys (15) are all arranged on the same side and preferably on the side where the transmission rollers (14) are situated, being arranged between them in the vertical direction (Z-Z).

5. Apparatus according to Claim 3, **characterized in that** the pulleys (15) are arranged, subdivided between one column and another column (11), being arranged in the vertical direction (Z-Z) between the transmission rollers (14) and between the driving roller (13) and a transmission roller (14).

6. Apparatus according to Claim 1, **characterized in that** the interaxial distance between the cutting wires (1) is equal to the final cutting thickness of the slab plus the diameter of the cutting wire itself.

Fig.1

Fig.2

Fig.3

Fig.4a

30mm

150

15   15a

THICKNESS 20mm
INTERAXIAL DISTANCE BETWEEN WIRES 30mm

Fig.4b

40mm

150          15    15a

THICKNESS 30mm    INTERAXIAL DISTANCE BETWEEN WIRES 40mm

Fig.5

15          1    1          15

14          13

150    150

13          14

# Fig.6a

# Fig.6b

Europäisches
Patentamt

European
Patent Office

Office européen
des brevets

# EUROPEAN SEARCH REPORT

**Application Number**

EP 11 15 4695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 123 384 A1 (CO FI PLAST S R L [IT]) 25 November 2009 (2009-11-25) * paragraphs [0005] - [0008] * * figures 1-5 * | 1 | INV. B23D57/00 B28D1/08 |
| A | WO 99/00210 A1 (BROCCO EMILIO [IT]; CHIOLINO FABRIZIO [IT]; OBERTO TARENA FELICINO [IT]) 7 January 1999 (1999-01-07) * page 1, line 35 - page 2, line 16 * * page 3, line 26 - line 32 * * page 4, line 18 - page 7, line 22 * * figures 2,5-7 * | 1 | |
| A | FR 735 820 A (E. MIES; J. VAN DEN WILDENBERG) 16 November 1932 (1932-11-16) * page 2, line 65 - line 90 * * figures * | 1 | |
| A | EP 1 745 875 A2 (CORSI ANDREA [IT]) 24 January 2007 (2007-01-24) * the whole document * | 1 | TECHNICAL FIELDS SEARCHED (IPC) B23D B28D |

The present search report has been drawn up for all claims

| Place of search | Date of completion of the search | Examiner |
|---|---|---|
| The Hague | 24 May 2011 | Chariot, David |

EPO FORM 1503 03.82 (P04C01)

## ANNEX TO THE EUROPEAN SEARCH REPORT
## ON EUROPEAN PATENT APPLICATION NO.

EP 11 15 4695

This annex lists the patent family members relating to the patent documents cited in  the above-mentioned European search report.
The members are as contained in the European Patent Office EDP file on
The European Patent Office is in no way liable for these particulars which are merely given for the purpose of information.

24-05-2011

| Patent document cited in search report | | Publication date | Patent family member(s) | | Publication date |
|---|---|---|---|---|---|
| EP  2123384 | A1 | 25-11-2009 | BR<br>US | PI0901443 A2<br>2009288651 A1 | 03-08-2010<br>26-11-2009 |
| WO 9900210 | A1 | 07-01-1999 | AU<br>IT | 8629398 A<br>T0970128 U1 | 19-01-1999<br>28-12-1998 |
| FR 735820 | A | 16-11-1932 | BE<br>DE | 388019 A<br>548791 C | 31-05-1932<br>19-04-1932 |
| EP 1745875 | A2 | 24-01-2007 | NONE | | |

EPO FORM P0459

For more details about this annex : see Official Journal of the European Patent Office, No. 12/82